# FASCICULE DE BREVET EUROPEEN

(11) **EP 2 576 255 B1**
(45) Date de publication et mention de la délivrance du brevet: **18.03.2015**
(21) Numéro de dépôt: 11731440.1
(22) Date de dépôt: 21.04.2011
(51) Int. Cl.: B60H 1/32, F25B 41/04

(54) **INSTALLATION DE CHAUFFAGE/CLIMATISATION À CONDENSEUR ET ÉVAPORATEUR EXTERNES ET CONTIGUS POUR LE CHAUFFAGE DE L'ÉVAPORATEUR EXTERNE**
HEIZ-/KLIMAANLAGE MIT EXTERNEM UND ANGRENZENDEM KONDENSATOR UND VERDAMPFER ZUM BEHEIZEN DES EXTERNEN VERDAMPFERS
HEATING/AIR-CONDITIONING INSTALLATION WITH EXTERNAL AND CONTIGUOUS CONDENSER AND EVAPORATOR FOR HEATING THE EXTERNAL EVAPORATOR

(30) Priorité: 25.05.2010 FR 1054015
(43) Date de publication de la demande: 10.04.2013
(73) Titulaire: Peugeot Citroën Automobiles SA, 78140 Vélizy Villacoublay (FR)
(72) Inventeur: BACH, Patrick, F-78960 Voisins Le Bretonneux (FR)
(86) Numéro de dépôt international: PCT/FR2011/050920
(87) Numéro de publication internationale: WO 2011/148071

(56) Documents cités:
- EP-A1- 1 568 524
- EP-A2- 1 610 076
- FR-A1- 2 525 330
- GB-A- 988 874
- US-A- 4 625 524
- US-A- 5 586 448

## Description

L'invention concerne les installations de chauffage/climatisation qui équipent certains véhicules, éventuellement de type automobile, et certains bâtiments.

Comme le sait l'homme de l'art, certaines installations de chauffage/ climatisation constituent des pompes à chaleur réversibles capables de fonctionner en mode chauffage comme en mode réfrigération. Elles comportent notamment à cet effet un condenseur interne chargé, en mode chauffage, de contribuer au chauffage d'un air dit intérieur par échange avec un fluide frigorigène chauffé et sous pression, et un évaporateur externe chargé, en mode chauffage, de réchauffer le fluide frigorigène refroidi et dépressurisé par échange avec un air dit extérieur.

On entend ici par "externe" un équipement intervenant dans le processus d'échange de calories avec l'air extérieur (comme par exemple un évaporateur externe ou un détendeur externe alimentant un évaporateur externe), et par "interne" un équipement intervenant dans le processus d'échange de calories avec l'air intérieur (comme par exemple un condenseur interne ou un évaporateur interne ou encore un détendeur interne alimentant un évaporateur interne).

Lorsqu'il fait froid ou très froid, c'est-à-dire lorsque la température de l'air extérieur est négative ou située au voisinage de zéro degré centigrade (0°C), le contact entre l'air extérieur et le fluide frigorigène partiellement refroidi, qui est issu du condenseur interne et qui circule dans l'évaporateur externe, provoque fréquemment le givrage de ce dernier, ce qui nuit à son fonctionnement et donc rend l'installation moins performante.

Pour tenter de remédier à cet inconvénient plusieurs solutions ont été proposées.

Ainsi, une première solution, notamment décrite dans le document brevet FR 2525330, consiste à adjoindre à l'évaporateur externe des conduits dédiés au dégivrage dans lesquels circule un fluide caloporteur issu d'un circuit de refroidissement (par exemple d'un moteur de véhicule). L'inconvénient de cette première solution réside dans le fait qu'elle nécessite une importante modification de l'évaporateur externe. En outre elle s'avère difficilement utilisable lorsque le fluide caloporteur est pratiquement inexistant ou énergétiquement indisponible en mode chauffage, comme c'est notamment le cas dans les véhicules dits "tout électrique" ou "hybride" ou dans les bâtiments.

Une deuxième solution, notamment décrite dans le document brevet GB 988874, consiste à implanter l'évaporateur externe dans la même enceinte que le condenseur interne, afin que le premier puisse se réchauffer grâce au liquide frigorigène circulant dans le second. L'inconvénient de cette deuxième solution réside dans le fait qu'elle est très contraignante, voire impossible à mettre en oeuvre dans un véhicule automobile, et nuit aux performances globales.

Une troisième solution, notamment décrite dans le document brevet US 5,586,448, consiste à utiliser un radiateur électrique additionnel pour réchauffer un fluide caloporteur que l'on fait circuler dans l'évaporateur externe. L'inconvénient de cette troisième solution réside dans le fait qu'elle nécessite non seulement une modification de l'évaporateur externe, mais également un dispositif de chauffage électrique additionnel, ce qui s'avère encombrant et consommateur d'énergie (ce qui est pénalisant en terme d'autonomie dans le cas d'un véhicule électrique ou hybride).

On connaît également du document EP1610076, une installation de chauffage/climatisation conforme au préambule de la revendication 1.

L'invention a donc pour but de proposer une installation de chauffage/climatisation optimisant le mode réfrigération.

Elle propose plus précisément à cet effet une installation de chauffage/climatisation conforme à la partie caractérisante de la revendication 1.

L'installation selon l'invention peut comporter d'autres caractéristiques qui peuvent être prises séparément ou en combinaison, et notamment :
- elle peut comprendre une première vanne de type trois voies et comprenant une entrée couplée à la sortie du compresseur, une première sortie couplée à l'entrée du condenseur interne et une seconde sortie couplée à une première entrée/sortie du condenseur externe;
- elle peut comprendre une deuxième vanne de type trois voies et comprenant une entrée couplée à la sortie du condenseur interne, une sortie couplée à l'entrée de l'évaporateur interne, et une entrée/sortie couplée à une seconde entrée/sortie du condenseur externe;
- elle peut comprendre une troisième vanne de type trois voies et comprenant une première entrée couplée à la seconde sortie de la première vanne, une sortie couplée à l'entrée du détendeur externe, et une entrée/sortie couplée à la première entrée/sortie dudit condenseur externe;
- elle peut comprendre une quatrième vanne de type trois voies et comprenant une première entrée couplée à la sortie de l'évaporateur interne, une seconde entrée couplée à la sortie de l'évaporateur externe, et une sortie couplée à l'entrée du compresseur;
- son condenseur interne peut être propre, en mode chauffage, à chauffer l'air intérieur par échange avec le fluide frigorigène issu du compresseur;
- en variante, son condenseur interne peut être propre, en mode chauffage, à réchauffer, par échange avec le fluide frigorigène qui est issu du compresseur, un fluide caloporteur qui est destiné à alimenter un aérotherme propre à chauffer l'air intérieur par échange thermique.

L'invention propose également un véhicule, éventuellement de type automobile, comprenant une installation de chauffage/climatisation du type de celle présentée ci-avant.

D'autres caractéristiques et avantages de l'invention apparaîtront à l'examen de la description détaillée ci-après, et des dessins annexés, sur lesquels:
- la figure 1 illustre schématiquement et fonctionnellement un premier exemple de réalisation d'une installation de chauffage/climatisation selon l'invention, en mode chauffage,
- la figure 2 illustre schématiquement et fonctionnellement un second exemple de réalisation d'une installation de chauffage/climatisation selon l'invention, en mode chauffage, et
- la figure 3 illustre schématiquement et fonctionnellement l'installation de chauffage/climatisation de la figure 1 en mode réfrigération.

Les dessins annexés pourront non seulement servir à compléter l'invention, mais aussi contribuer à sa définition, le cas échéant.

L'invention a pour but de proposer une installation de chauffage/ climatisation (IC), de type pompe à chaleur réversible.

Dans ce qui suit, on considère, à titre d'exemple non limitatif, que l'installation de chauffage/climatisation (IC) fait partie d'un véhicule automobile, comme par exemple une voiture, éventuellement de type "tout électrique" ou "hybride". Mais, l'invention n'est pas limitée à cette application. Elle concerne en effet toute installation de chauffage/climatisation de type pompe à chaleur réversible, qu'elle soit destinée à être installée dans un véhicule ou dans un bâtiment.

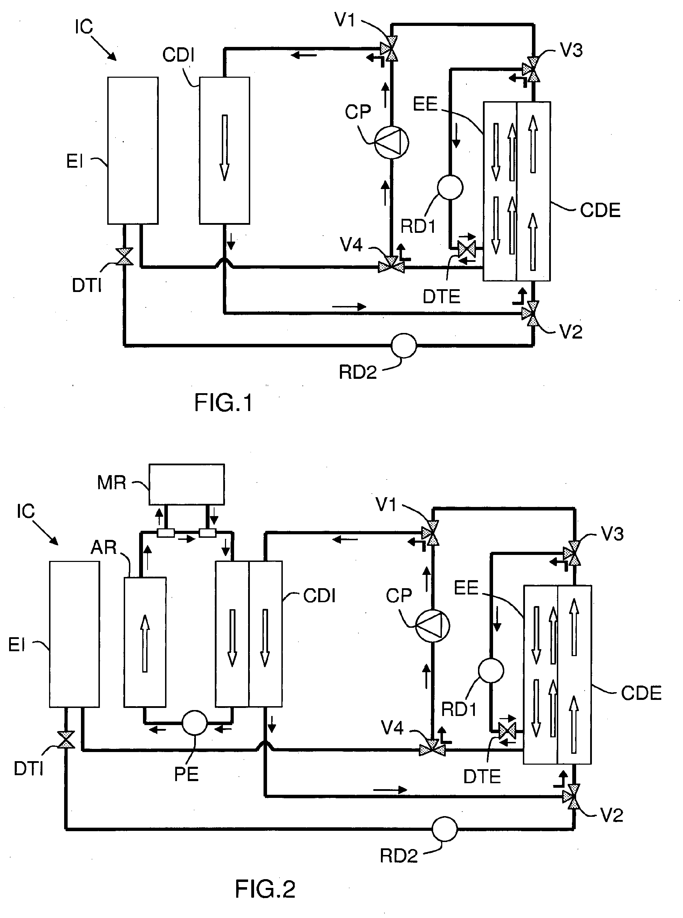

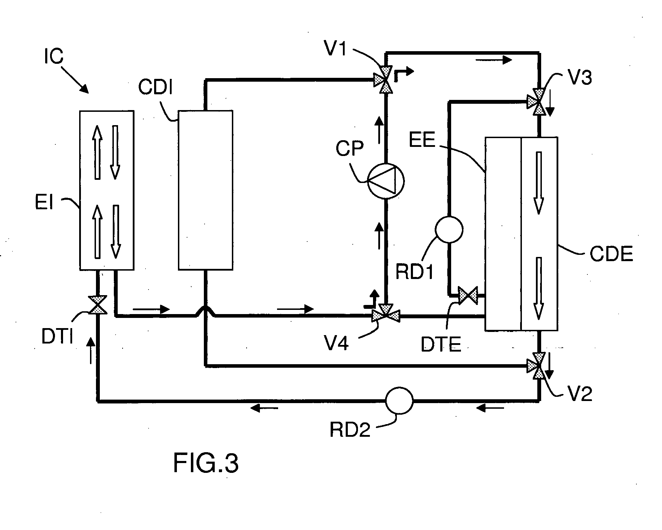

On a schématiquement représenté sur les figures 1 à 3 deux exemples de réalisation d'installation de chauffage/climatisation IC, selon l'invention. Le premier exemple de réalisation, illustré sur les figures 1 et 3, est par exemple destiné à être implanté dans un véhicule automobile électrique ou un bâtiment. Le second exemple de réalisation, illustré sur la figure 2, est par exemple destiné à être implanté dans un véhicule automobile hybride.

Une installation de chauffage/climatisation IC, selon l'invention, est destinée à fonctionner en mode chauffage ou en mode réfrigération selon les besoins. Elle comprend notamment à cet effet un compresseur CP, un condenseur interne CDI, un détendeur externe DTE, un évaporateur externe EE, et un condenseur externe CDE qui interviennent tous au moins dans le mode chauffage.

Le compresseur CP est chargé de chauffer et de pressuriser un fluide frigorigène qui, en mode chauffage, est issu de l'évaporateur externe EE.

Le condenseur interne CDI n'intervient que dans le mode chauffage. Il est chargé de contribuer au chauffage d'un air dit intérieur (qui provient ici de l'intérieur de l'habitacle du véhicule) par échange avec le fluide frigorigène (transformé en gaz chaud et pressurisé par le compresseur CP. Il délivre sur sa sortie un fluide frigorigène en phase liquide partiellement refroidi lors de l'échange avec l'air intérieur.

Dans l'exemple illustré sur les figures 1 et 3, le condenseur interne CDI est de type gaz/air. Il est donc chargé de chauffer l'air intérieur qui le traverse par échange avec le fluide frigorigène (gaz chaud et pressurisé) qui circule dans ses conduits ou entre ses plaques empilées.

Dans l'exemple illustré sur la figure 2, le condenseur interne CDI est de type gaz/liquide. Il est donc chargé de réchauffer un fluide caloporteur, qui circule dans certains de ses conduits ou entre certaines parties de ses plaques empilées et qui est issu d'un circuit de refroidissement, par échange avec le fluide frigorigène (gaz chaud et pressurisé) qui circule dans certains autres de ses conduits ou entre certaines autres parties de ses plaques empilées. Ce fluide caloporteur réchauffé regagne alors le circuit de refroidissement pour alimenter une pompe PE, elle-même chargée d'alimenter un aérotherme AR qui est chargé, en mode chauffage, de chauffer l'air intérieur qui le traverse par échange avec le fluide caloporteur réchauffé. Classiquement, le fluide caloporteur qui sort de l'aérotherme AR alimente la portion du circuit de refroidissement qui traverse le moteur MR et qui alimente le condenseur interne CDI.

On entend ici par « aérotherme » un échangeur de chaleur de type air/liquide.

Par ailleurs, on notera que l'aérotherme AR peut éventuellement faire partie de l'installation IC.

Le détendeur externe DTE n'intervient que dans le mode chauffage. Il est chargé de refroidir et dépressuriser le fluide frigorigène qui est issu du condenseur externe CDI, avant qu'il n'alimente l'évaporateur externe EE. Il délivre un liquide refroidi et dépressurisé.

L'évaporateur externe EE n'intervient que dans le mode chauffage. Il est chargé de réchauffer le fluide frigorigène (liquide refroidi et dépressurisé) qui est issu du détendeur externe DTE par échange avec l'air extérieur (froid), c'est-à-dire absorption de calories contenues dans l'air extérieur. Il délivre en sortie un fluide frigorigène, en phase gazeuse et légèrement réchauffé, qui est destiné à alimenter le compresseur CP.

Le condenseur externe CDE est contigu avec l'évaporateur externe EE.

On entend ici par "contigu" le fait d'être au contact de l'évaporateur externe EE, ou bien dans le voisinage immédiat de ce dernier (EE), typiquement à quelques centimètres, ou encore imbriqué dans l'évaporateur externe EE.

Le condenseur externe CDE est chargé, en mode chauffage, de collecter le fluide frigorigène, qui est issu du condenseur interne CDI, pour alimenter avec ce fluide frigorigène le détendeur externe DTE et constituer une source de chaleur pour l'évaporateur externe EE contigu. On comprendra alors que cette source de chaleur (que constitue le condenseur externe CDE) est de nature à réduire la probabilité que l'évaporateur externe EE givre en présence d'un air extérieur dont la température est basse.

On entend ici par "réduire la probabilité de givrer" le fait de limiter autant que possible la création de givre au niveau de l'évaporateur externe EE. Typiquement, du givre ne pourra apparaître qu'en présence d'une température extérieure basse, d'une hygrométrie importante et d'une faible vitesse d'air extérieur.

Il est important de noter que le réchauffement de l'évaporateur externe EE peut se faire par conduction thermique, en cas d'imbrication ou de contact mécanique avec le condenseur externe CDE, et/ou par le biais de l'air extérieur qui a été réchauffé lors de son passage au travers du condenseur externe CDE (ce qui nécessite que ce dernier (CDE) soit placé en amont de l'évaporateur externe EE vis-à-vis du flux d'air extérieur, comme illustré).

On notera que le condenseur externe CDE et l'évaporateur externe EE peuvent constituer deux sous-parties contiguës (éventuellement imbriquées) d'un même échangeur de chaleur ou bien deux échangeurs de chaleur indépendants et contigus.

On notera également que le condenseur externe CDE peut également fonctionner dans le mode réfrigération. Dans ce cas, l'installation doit également comprendre un détendeur interne DTI et un évaporateur interne El, comme illustré sur les figures 1 à 3.

Le détendeur interne DTI n'intervient que dans le mode réfrigération. Il est chargé de refroidir et dépressuriser le fluide frigorigène (en phase liquide), qui est issu du condenseur externe CDE, avant qu'il ne parvienne dans l'évaporateur interne El.

L'évaporateur interne El n'intervient également que dans le mode réfrigération. Il est chargé de refroidir l'air intérieur qui le traverse par échange thermique avec le fluide frigorigène refroidi et dépressurisé (en phase liquide) qui est issu du détendeur interne DTI.

Dans le mode réfrigération, le condenseur externe CDE est chargé de pré-refroidir le fluide frigorigène (gaz chaud et pressurisé), qui est issu du compresseur CP, par échange thermique avec l'air extérieur, afin d'alimenter le détendeur interne DTI en fluide frigorigène pré-refroidi (en phase liquide).

Afin de faciliter le contrôle du fonctionnement de l'installation IC, mais également de limiter son encombrement, cette dernière (IC) peut comprendre l'une au moins des vannes Vj, de type trois voies, présentées ci-après:
- une première vanne V1 (j = 1) comprenant une entrée couplée à la sortie du compresseur CP, une première sortie couplée à l'entrée du condenseur interne CDI et une seconde sortie couplée à une première entrée/sortie du condenseur externe CDE,
- une deuxième vanne V2 (j = 2) comprenant une entrée couplée à la sortie du condenseur interne CDI, une sortie couplée à l'entrée de l'évaporateur interne El, et une entrée/sortie couplée à une seconde entrée/sortie du condenseur externe CDE,
- une troisième vanne V3 (j = 3) comprenant une première entrée couplée à la seconde sortie de la première vanne V1, une sortie couplée à l'entrée du détendeur externe DTI, et une entrée/sortie couplée à la première entrée/sortie du condenseur externe CDE,
- une quatrième vanne V4 (j = 4) comprenant une première entrée couplée à la sortie de l'évaporateur interne El, une seconde entrée couplée à la sortie de l'évaporateur externe EE, et une sortie couplée à l'entrée du compresseur CP.

On notera également, comme illustré non limitativement sur les figures 1 à 3, que l'installation IC peut éventuellement comporter un ou plusieurs réservoirs de déshydratation RD1, RD2. Dans les exemples illustrés, l'installation IC comporte un premier réservoir de déshydratation RD1 implanté entre une première entrée/sortie du condenseur externe CDE et l'entrée du détendeur externe DTE, et un second réservoir de déshydratation RD2 implanté entre une seconde entrée/sortie du condenseur externe CDE et l'entrée de l'évaporateur interne El.

Le mode chauffage de l'installation IC est matérialisé par des flèches sur les figures 1 et 2. Dans ce mode chauffage, le fluide frigorigène circule du compresseur CP vers le condenseur interne CDI où il sert (figure 1) ou seulement contribue (figure 2) à réchauffer l'air intérieur par échange thermique. La première vanne V1 est alors configurée de manière à aiguiller le fluide frigorigène vers le condenseur interne CDI. Puis, le fluide frigorigène va du condenseur interne CDI vers le condenseur externe CDE, via la deuxième vanne V2 qui est configurée à cet effet. Il réchauffe alors l'évaporateur externe EE contigu et permet ainsi qu'il ne soit pas ou peu givré. Puis, le fluide frigorigène va du condenseur externe CDE vers le détendeur externe DTE, via la troisième vanne V3 qui est configurée à cet effet. Il est alors partiellement refroidi et dépressurisé. Puis, le fluide frigorigène va du détendeur externe DTE vers l'évaporateur externe EE où il est refroidi par échange thermique avec l'air extérieur. Enfin, le fluide frigorigène va de l'évaporateur externe EE vers le compresseur CP où il est transformé en gaz chauffé et pressurisé, via la quatrième vanne V4 qui est configurée à cet effet.

Le mode réfrigération de l'installation IC est matérialisé par des flèches sur la figure 3. Dans ce mode réfrigération, le fluide frigorigène circule du compresseur CP vers le condenseur externe CDE où il est partiellement refroidi par échange thermique avec l'air extérieur. Les première V1 et troisième V3 vannes sont configurées à cet effet. Puis, le fluide frigorigène va du condenseur externe CDE vers le détendeur interne DTI où il est refroidi et dépressurisé, via la deuxième vanne V2 qui est configurée à cet effet. Puis, le fluide frigorigène va du détendeur interne DTI vers l'évaporateur interne El où il refroidit par échange thermique l'air intérieur qui traverse ce dernier (El). Puis, le fluide frigorigène va de l'évaporateur interne El vers le compresseur CP où il est transformé en gaz chauffé et pressurisé, via la quatrième vanne V4 qui est configurée à cet effet.

L'invention offre un certain nombre d'avantages, parmi lesquels:
- elle ne nécessite pas de dispositif de chauffage additionnel, ce qui est particulièrement avantageux en cas d'implantation dans un système de type tout électrique ou hybride,
- elle permet d'améliorer le rendement (coefficient de performance) du cycle thermodynamique de l'installation lorsque la température extérieure est froide, voire très froide, sans augmenter notablement sa complexité, en diminuant l'enthalpie à l'entrée de l'évaporateur externe, permettant ainsi d'augmenter l'énergie d'évaporation de ce dernier pour un même débit de fluide frigorigène circulant et donc une même énergie consommée.

L'invention ne se limite pas aux modes de réalisation d'installation de chauffage/climatisation et de véhicule décrits ci-avant, seulement à titre d'exemple.

## Revendications

1. Installation de chauffage/climatisation (IC) comprenant un compresseur (CP) propre à chauffer et pressuriser un fluide frigorigène, un condenseur interne (CDI) propre, en mode chauffage, à contribuer au chauffage d'un air dit intérieur par échange avec ledit fluide frigorigène issu dudit compresseur (CP), un détendeur externe (DTE) propre, en mode chauffage, à refroidir ledit fluide frigorigène, et un évaporateur externe (EE) propre, en mode chauffage, à réchauffer ledit fluide frigorigène issu dudit détendeur externe (DTE) par échange avec un air dit extérieur pour alimenter ledit compresseur (CP), ladite installation comprenant en outre un condenseur externe (CDE) contigu avec ledit évaporateur externe (EE) et propre, en mode chauffage, à collecter ledit fluide frigorigène issu dudit condenseur interne (CDI) pour alimenter ledit détendeur externe (DTE) et constituer une source de chaleur pour ledit évaporateur externe (EE) contigu, de manière à réduire la probabilité que ce dernier (EE) givre en présence d'un air extérieur présentant une température basse et comprenant un détendeur interne (DTI) propre, en mode réfrigération, à refroidir ledit fluide frigorigène, ladite installation étant **caractérisée, en ce qu'**elle comprend un évaporateur interne (El) propre, en mode réfrigération, à refroidir ledit air intérieur par échange avec ledit fluide frigorigène issu dudit détendeur interne (DTI), et **en ce que** ledit condenseur externe (CDE) est propre, en mode réfrigération, à pré-refroidir ledit fluide frigorigène issu dudit compresseur (CP) par échange avec ledit air extérieur, en vue d'alimenter en fluide frigorigène pré-refroidi ledit détendeur interne (DTI).

2. Installation selon la revendication 1, **caractérisée en ce qu'**elle comprend une première vanne (V1) de type trois voies et comprenant une entrée couplée à la sortie dudit compresseur (CP), une première sortie couplée à l'entrée dudit condenseur interne (CDI) et une seconde sortie couplée à une première entrée/sortie dudit condenseur externe (CDE).

3. Installation selon l'une des revendications 1 ou 2, **caractérisée en ce qu'**elle comprend une deuxième vanne (V2) de type trois voies et comprenant une entrée couplée à la sortie dudit condenseur interne (CDI), une sortie (couplée à l'entrée dudit évaporateur interne (El), et une entrée/sortie couplée à une seconde entrée/sortie dudit condenseur externe (CDE).

4. Installation selon l'une des revendications 2 ou 3, **caractérisée en ce qu'**elle comprend une troisième vanne (V3) de type trois voies et comprenant une première entrée couplée à la seconde sortie de ladite première vanne (V1), une sortie couplée à l'entrée dudit détendeur externe (DTE), et une entrée/sortie couplée à ladite première entrée/sortie dudit condenseur externe (CDE).

5. Installation selon l'une des revendications 1 à 4, **caractérisée en ce qu'**elle comprend une quatrième vanne (V4) de type trois voies et comprenant une première entrée couplée à la sortie dudit évaporateur interne (El), une seconde entrée couplée à la sortie dudit évaporateur externe (EE), et une sortie couplée à l'entrée dudit compresseur (CP).

6. Installation selon l'une des revendications 1 à 5, **caractérisée en ce que** ledit condenseur interne (CDI) est propre, en mode chauffage, à chauffer ledit air intérieur par échange avec ledit fluide frigorigène issu dudit compresseur (CP).

7. Installation selon l'une des revendications 1 à 5, **caractérisée en ce que** ledit condenseur interne (CDI) est propre, en mode chauffage, à réchauffer, par échange avec ledit fluide frigorigène issu dudit compresseur (CP), un fluide caloporteur destiné à alimenter un aérotherme (AR) propre à chauffer ledit air intérieur par échange thermique.

8. Véhicule, **caractérisé en ce qu'**il comprend une installation de chauffage/climatisation (IC) selon l'une des revendications précédentes.

## Patentansprüche

1. Heizungs-/Klimaanlage (IC), umfassend einen Verdichter (CP), der geeignet ist, ein Kältemittel zu erhitzen und mit Druck zu beaufschlagen, einen internen Kondensator (CDI), der geeignet ist, im Heizmodus zur Erhitzung einer so genannten Innenluft durch Austausch mit dem Kältemittel aus dem Verdichter (CP) beizutragen, einen externen Druckminderer (DTE), der geeignet ist, im Heizmodus das Kältemittel abzukühlen, und einen externen Verdampfer (EE), der geeignet ist, im Heizmodus das Kältemittel aus dem externen Druckminderer (DTE) durch Austausch mit einer so genannten Außenluft wieder zu erhitzen, um den Verdichter (CP) zu versorgen, wobei die Anlage ferner einen externen Kondensator (CDE) umfasst, der an den externen Verdampfer (EE) angrenzt und geeignet ist, im Heizmodus das Kältemittel aus dem internen Kondensator (CDI) zu sammeln, um den externen Druckminderer (DTE) zu versorgen und eine Wärmequelle für den angrenzenden externen Verdampfer (EE) zu bilden, so dass die Wahrscheinlichkeit verringert wird, dass dieser (EE) angesichts einer Außenluft, die eine niedrige Temperatur aufweist, vereist, und umfassend einen internen Druckminderer (DTI), der geeignet ist, im Kühlmodus das Kältemittel abzukühlen, wobei die Anlage **dadurch gekennzeichnet ist, dass** sie einen internen Verdampfer (EI) umfasst, der geeignet ist, im Kühlmodus die Innenluft durch Austausch mit dem Kältemittel aus dem internen Druckminderer (DTI) abzukühlen, und dadurch, dass der externe Kondensator (CDE) geeignet ist, im Kühlmodus das Kältemittel aus dem Verdichter (CP) durch Austausch mit der Außenluft vorabzukühlen, um den internen Druckminderer (DTI) mit vorabgekühltem Kältemittel zu versorgen.

2. Anlage nach Anspruch 1, **dadurch gekennzeichnet, dass** sie ein erstes Ventil (V1) vom Typ 3-Wege-Ventil umfasst, das einen Eingang, der an den Ausgang des Verdichters (CP) gekoppelt ist, einen ersten Ausgang, der an den Eingang des internen Kondensators (CDI) gekoppelt ist, und einen zweiten Ausgang umfasst, der an einen ersten Eingang/Ausgang des externen Kondensators (CDE) gekoppelt ist.

3. Anlage nach einem der Ansprüche 1 oder 2, **dadurch gekennzeichnet, dass** sie ein zweites Ventil (V2) vom Typ 3-Wege-Ventil umfasst, das einen Eingang, der an den Ausgang des internen Kondensators (CDI) gekoppelt ist, einen Ausgang, der an den Eingang des internen Verdampfers (EI) gekoppelt ist, und einen Eingang/Ausgang umfasst, der an einen zweiten Eingang/Ausgang des externen Kondensators (CDE) gekoppelt ist.

4. Anlage nach einem der Ansprüche 2 oder 3, **dadurch gekennzeichnet, dass** sie ein drittes Ventil (V3) vom Typ 3-Wege-Ventil umfasst, das einen ersten Eingang, der an den zweiten Ausgang des ersten Ventils (V1) gekoppelt ist, einen Ausgang, der an den Eingang des externen Druckminderers (DTE) gekoppelt ist, und einen Eingang/Ausgang umfasst, der an den ersten Eingang/Ausgang des externen Kondensators (CDE) gekoppelt ist.

5. Anlage nach einem der Ansprüche 1 bis 4, **dadurch gekennzeichnet, dass** sie ein viertes Ventil (V4) vom Typ 3-Wege-Ventil umfasst, das einen ersten Eingang, der an den Ausgang des internen Verdampfers (EI) gekoppelt ist, einen zweiten Eingang, der an den Ausgang des externen Verdampfers (EE) gekoppelt ist, und einen Ausgang umfasst, der an den Eingang des Verdichters (CP) gekoppelt ist.

6. Anlage nach einem der Ansprüche 1 bis 5, **dadurch gekennzeichnet, dass** der interne Kondensator (CDI) geeignet ist, im Heizmodus die Innenluft durch Austausch mit dem Kältemittel aus dem Verdichter (CP) zu erhitzen.

7. Anlage nach einem der Ansprüche 1 bis 5, **dadurch gekennzeichnet, dass** der interne Kondensator (CDI) geeignet ist, im Heizmodus durch Austausch mit dem Kältemittel aus dem Verdichter (CP) einen Wärmeträger wieder zu erhitzen, der einen Lufterhitzer (AR) versorgen soll, der geeignet ist, die Innenluft durch Wärmeaustausch zu erhitzen.

8. Fahrzeug, **dadurch gekennzeichnet, dass** es eine Heizungs-/Klimaanlage (IC) nach einem der vorhergehenden Ansprüche umfasst.

## Claims

1. Heating/air conditioning installation (IC) comprising a compressor (CP) able to heat and pressurise a refrigeration fluid, an internal condenser (CDI) able, in heating mode, to contribute to heating so-called internal air by exchange with said refrigeration fluid issuing from said compressor (CP), an external pressure reducing valve (DTE) able, in heating mode, to cool said refrigeration fluid, and an external evaporator (EE) able, in heating mode, to heat said refrigeration fluid issuing from said external pressure reducing valve (DTE) by exchange with so-called external air in order to supply said compressor (CP), said installation further comprising an external condenser (CDE) contiguous with said external evaporator (EE) and able, in heating mode, to collect said refrigeration fluid issuing from said internal condenser (CDI) in order to supply said external pressure reducing valve (DTE) and to constitute a heat source for said contiguous external evaporator (EE) so as to reduce the probability that the latter (EE) will frost up in the presence of external air having a low temperature and comprising an internal pressure reducing valve (DTI) able, in refrigeration mode, to cool said refrigeration fluid, said installation being **characterised in that** it comprises an internal evaporator (EI) able, in refrigeration mode, to cool said internal air by exchange with said refrigeration fluid issuing from said internal pressure reducing valve (DTI), and **in that** said external condenser (CDE) is able, in refrigeration mode, to precool said refrigeration fluid issuing from said compressor (CP) by exchange with said external air, with a view to supplying said internal pressure reducing valve (DTI) with precooled refrigeration fluid.

2. Installation according to claim 1, **characterised in that** it comprises a first three-way valve (V1) comprising an inlet coupled to the outlet of said compressor (CP), a first outlet coupled to the inlet of said internal condenser (CDI) and a second outlet coupled to a first inlet/outlet of said external condenser (CDE).

3. Installation according to one of claims 1 or 2, **characterised in that** it comprises a second three-way valve (V2) comprising an inlet coupled to the outlet of said internal condenser (CDI), an outlet coupled to the inlet of said internal evaporator (EI) and an inlet/outlet coupled to a second inlet/outlet of said external condenser (CDE).

4. Installation according to one of claims 2 or 3, **characterised in that** it comprises a third three-way valve (V3) comprising a first inlet coupled to the second outlet of said first valve (V1), an outlet coupled to the inlet of said external pressure reducing valve (DTE) and an inlet/outlet coupled to said first inlet/outlet of said external condenser (CDE).

5. Installation according to one of claims 1 to 4, **characterised in that** it comprises a fourth three-way valve (V4) comprising a first inlet coupled to the outlet of said internal evaporator (EI), a second inlet coupled to the outlet of said external evaporator (EE) and an outlet coupled to the inlet of said compressor (CP).

6. Installation according to one of claims 1 to 5, **characterised in that** said internal condenser (CDI) is able, in heating mode, to heat said external air by exchange with said refrigeration fluid issuing from said compressor (CP).

7. Installation according to one of claims 1 to 5, **characterised in that** said internal condenser (CDI) is able, in heating mode, to heat, by exchange with said refrigeration fluid issuing from said compressor (CP), a heat-transfer fluid intended to supply a heater (AR) able to heat said internal air by heat exchange.

8. Vehicle, **characterised in that** it comprises a heating/air conditioning installation (IC) according to one of the preceding claims.
